# EUROPÄISCHE PATENTSCHRIFT

(11) **EP 0 754 414 B1**
(45) Veröffentlichungstag und Bekanntmachung des Hinweises auf die Patenterteilung: **14.06.2000**
(21) Anmeldenummer: 96105706.4
(22) Anmeldetag: 11.04.1996
(51) Int. Cl.: A43B 13/38, A43B 17/14

(54) **Einlegesohle für Schuhe und Verfahren zur Herstellung**
Insert sole for shoes and its manufacturing method
Semelle insérable pour chaussures et son procédé de fabrication

(30) Priorität: 15.07.1995 DE 19525858
(43) Veröffentlichungstag der Anmeldung: 22.01.1997
(73) Patentinhaber: Firma Carl Freudenberg, 69469 Weinheim (DE)
(72) Erfinder: Groitzsch, Dieter, Dr., 69493 Hirschberg (DE)

(56) Entgegenhaltungen:
- EP-A- 0 272 690
- WO-A-94/03081
- PATENT ABSTRACTS OF JAPAN vol. 16, no. 342 (C-0966), 24.Juli 1992 & JP 04 100960 A (KURARAY CO. LTD.), 2.April 1992, & DATABASE WPI Section Ch, Week 9221 Derwent Publications Ltd., London, GB; Class AFP, AN 92-170419 (30) & JP 04 100 960 A (KURARAY CO. LTD.) , 2.April 1992
- PATENT ABSTRACTS OF JAPAN vol. 14, no. 236 (C-0720), 18.Mai 1990 & JP 02 060601 A (NISSHIN RUBBER K.K.), 1.März 1990, & DATABASE WPI Section Ch, Week 9015 Derwent Publications Ltd., London, GB; Class AFP, AN 90-111094 (15) & JP 02 060 601 A (NISSHIN GUM KOGYO) , 1.März 1990
- PATENT ABSTRACTS OF JAPAN vol. 186, no. 78 (C-1290), 20.Dezember 1994 & JP 06 264351 A (KURARAY CO. LTD.), 20.September 1994, & DATABASE WPI Section Ch, Week 9442 Derwent Publications Ltd., London, GB; Class AF, AN 94-338784 (42) & JP 06 264 351 A (KURARAY CO. LTD.) , 20.September 1994

## Beschreibung

Die Erfindung betrifft eine Einlegesohle für Schuhe nach dem Oberbegriff des ersten Patentanspruchs. Ferner wird ein hierfür geeignetes Herstellungsverfahren angegeben.

Eine gattungsgemäße Einlegesohle ist aus der DE 30 12 114 A1 bekannt. Darin soll die Aufgabe gelöst werden, eine Einlegesohle zu schaffen, die sehr feuchtigkeitsaufsaugend und trotzdem eine hohe Druckstabilität aufweist.

Die Lösung dieser Aufgabe wird dahingehend angegeben, daß das Grundmaterial der Einlegesohle ein Nadelfilz ist, welches aus einem Fasergemisch aus 15 bis 25 % Zellwolle und 75 bis 85 % Polyesterfasern besteht. Etwa 20 % der Polyesterfasern sind als Schrumpffasern dem Grundmaterial beigemischt. Großer Wert wird auf die Vermeidung der Verwendung von Klebmaterial gelegt. Die so hergestellte Einlegesohle besitzt dennoch eine hohe Festigkeit und ist weich und saugfähig.

Das Herstellungsverfahren verläuft dahingehend, daß aus Zellwolle und Polyesterfasern ein Vlies hergestellt, dieses gekrempelt und anschließend genadelt wird, woran sich ein Imprägnierverfahren zur bakteriziden Ausrüstung anschließt. Danach wird die fertige Sohle ausgestanzt. Vorteilhafterweise wird der Nadelfilz sofort nach dem Nadeln geschrumpft. Dieses Nadeln erfolgt zweifach, vorzugsweise je einmal von jeder Seite aus.

Diese Einlegesohle des Standes der Technik weist keinerlei stützende Funktion für den Fuß auf. Ferner ist sie anfällig gegen Knickfaltenbildung und Verschiebung im Schuh während der Laufbewegung.

Die Aufgabe der vorliegenden Erfindung war es daher, diese Einlegesohle des Standes der Technik dahingehend weiterzuentwickeln, daß, unter Beibehaltung der Fähigkeit, Feuchtigkeit aufzusaugen und weiterzuleiten, eine stützende Funktion im Sinne eines Fußbettes vorliegt und daß bei der Krafteinwirkung des sich bewegenden Fußes die Einlegesohle eine ausreichende Beständigkeit gegen Knickfaltenbildung und das Verschieben im Schuh aufweist. Sie soll dabei der Schuh-Innenform genau angepaßt ausgestaltet werden können.

Die Lösung dieser Aufgabe besteht in der Verwirklichung der Kennzeichen des ersten Patentanspruchs sowie in einem Verfahren zur Herstellung einer Einlegesohle mit diesen Kennzeichen. Vorteilhafte Ausgestaltungen der Einlegesohle werden in den Unteransprüchen wiedergegeben.

Wesentlich für den Tragekomfort, insbesondere für die Wasserdampfdurchlässigkeit sowie die Wasserdampfaufnahme und -wiedergabe, ist auch bei der Erfindung, wie im Stand der Technik, die Freiheit der Einlegesohle von jeglichem zusätzlichen Bindemittel im Faserverbund.

Mit dieser Vorgabe besteht die Erfindung darin, daß der das Grundmaterial bildende Vliesstoff aus einem Stapelfasergemisch folgender Zusammensetzung besteht: 50 bis 60 Gew.-% Fasern des Kern/Mantel-Typs mit einem Schmelzbereich der Copolyester-Mantelkomponente von 110 bis 140°C und der Polyethylenterephthalat-Kern-Komponente von 255 bis 260°C, 5 bis 15 Gew.-% Polyester-Hochschrumpffasern und 25 bis 40 Gew.-% saugfähige Fasern.

Die angegebenen Kern/Mantel-Fasern sind im Handel erhältlich. Der Copolyester der Mantelkomponente wird üblicherweise gebildet aus Polykondensationsprodukten von Dicarbonsäuren, wie zum Beispiel Terephthalsäure, Isophthalsäure oder Adipinsäure, mit Diolkomponenten, wie zum Beispiel Polyethylenglykol, Butylenglykol oder Hexamethylenglykol.

Die Polyester-Hochschrumpffasern sind ebenfalls im Handel erhältlich und bestehen üblicherweise aus schrumpffähigem Polyethylenterephthalat.

Für die saugfähigen Fasern verwendet man vorzugsweise Zellwolle, Lyocell, Wolle oder Baumwolle.

Dieses Grundmaterial besitzt ein Flächengewicht von 800 bis 1200 g/m² bei einer Dicke von 0,70 bis 0,85 cm. Diese Werte gelten für einen Zustand, bei welchem die Hochschrumpffasern sich bereits im geschrumpften Zustand befinden.

Die später dem Fuß zugewandte Seite dieses das Grundmaterial bildenden Vliesstoffs ist mit einem weiteren, bindemittelfreien, abriebbeständigen und prägegebundenen Vliesstoff laminiert. Der innere Faserzusammenhalt auch dieses Vliesstoffs ist allein durch autogene Verschweißung der Fasern miteinander und nicht durch ein separates Bindemittel verwirklicht, so daß auch hier die Fähigkeit, Feuchtigkeit aufzusaugen und weiterzuleiten, vorliegt.

Dieser Abdeckvliesstoff ist um mindestens 1/5 dünner als der Vliesstoff des Grundmaterials. Zweckmäßig besteht er vollständig aus Bikomponentenfasern, und zwar entweder aus solchen des gleichen Typs, wie sie im Grundmaterial vorhanden sind, oder aus den Faserkomponenten Polyamid 6,6 /Polyamid 6 oder Polyester/Copolyester. In jedem Falle besteht dieser Abdeckvliesstoff jedoch aus Stapelfasern oder Spinnfilamenten.

Erfindungsgemäß ist das beschriebene Laminat dreidimensional verformt. Im Sinne der eingangs gestellten Aufgabe wird so gewährleistet, daß die Einlegesohle sich an den nicht waagerechten Innenbereichen des Schuhs abstützt und auch beim Tragen desselben fest in ihrer Position verbleibt. Die Bildung von Knickfalten durch Längsbewegungen des Fußes wird durch die erfindungsgemäße Ausgestaltung ebenfalls ausgeschlossen.

Zum Zwecke der Geruchsabsorption ist es vorteilhaft, wenn der abriebbeständige Abdeckvliesstoff auf der dem Grundmaterial zugewandten Seite geruchsabsobierende Bestandteile enthält, wie zum Beispiel Aktivkohle-Partikel oder -Fasern oder Zeolithe.

Es ist selbstverständlich möglich, sowohl das Grundmaterial als auch den Abdeckvliesstoff oder nur einen dieser beiden bakterizid auszurüsten, wie dies in DE 30 12 114 A1 beschrieben ist.

Die Herstellung der beanspruchten Einlegesohle richtet sich nach den geforderten Gebrauchseigenschaften, den erfindungsgemäß eingesetzten Materialien und der Wirtschaftlichkeit des Verfahrens.

Ein Stapelfasergemisch, bestehend aus 50 bis 60 Gew.-% Kern/Mantel-Fasern mit einem Schmelzbereich der Copolyester-Mantelkomponente von 110 bis 140°C und der Polyethylenterephthalat-Kern-Komponente von 255 bis 260°C, aus 5 bis 15 Gew.-% Polyester-Hochschrumpffasern und aus 25 bis 40 Gew.-% saugfähigen Fasern, wird durch Krempeln zu einem Vlies gelegt. Dieses wird anschließend einmalig mechanisch von einer seiner Flächen aus genadelt, um den Faserzusammenhalt zu verbessern. Eine solche nur schwache Vernadelung gewährleistet eine genügend große Dicke des Vliesstoffs und ermöglicht die spätere, starke Schrumpfung, da die Hochschrumpffasern bei letzterem Vorgang eine nur geringe mechanische Behinderung durch benachbarte Fasern erfahren; die Einzelfasern können leicht aneinander gleiten.

Es folgt der Schrumpfvorgang, wobei die Polyester-Hochschrumffasern des Vliesstoffs hierzu einem Strom überhitzten Wasserdampfes berührungslos ausgesetzt werden. Dies erfolgt zweckmäßig in einem sogenannten Schrumpfstiefel: Der Vliesstoff durchläuft darin im freien Fall eine Zone mit überhitztem Wasserdampf, wird nach dem Auftreffen auf den Boden der Vorrichtung getäfelt, d.h. in lockerer, gestaffelter Faltung gelegt und anschließend aufgerollt. Der freie Fall schließt eine Behinderung des Schrumpfvorganges, zum Beispiel durch eine störende Unterlage, weitgehend aus.

Als für die Fußseite vorgesehene Abdeckung verwendet man einen vorgefertigten, abriebbeständigen, prägegebundenen Vliesstoff, dessen Faserzusammenhalt ohne Bindemittel, allein durch interne Verschweißung der darin enthaltenen Fasern und die Prägung, bewerkstelligt ist. Die hierzu geeigneten Fasertypen wurden bereits genannt.

Dieser, mindestens um 1/5 dünner als das geschrumpfte Grundmaterial ausgestaltete Vliesstoff wird auf der mit dem Grundmaterial zu verbindenden Fläche mit einem Haftmassenpuder-Auftrag versehen. Dieser kann auch, im Interesse einer guten Luft- und Feuchtigkeits-Durchlässigkeit, musterartig erfolgen. Danach wird der Abdeckvliesstoff mit Hilfe eines Wärmestrahlers auf eine Temperatur erhitzt, bei welcher die Haftmasse sinterfähig wird. Zweckmäßig bedeutet dies 20 bis 40°C oberhalb des Erweichungsbereichs der Haftmasse.

Der erhitzte Vliesstoff wird nun auf das unbeheizte Grundmaterial aufgelegt, wonach direkt anschließend zwischen unbeheizten Walzen beide Vliesstoffe miteinander mittels der angesinterten, sich abkühlenden Haftmasse verbunden werden.

Das entstandene Laminat wird anschließend dreidimensional verformt. Dieser Vorgang erfolgt in einem tiefziehenden, unbeheizten Preßwerkzeug. Dieses ist in der Lage, Platten des Laminats aufzunehmen und enthält mehrere Formhohlräume, welche den jeweils herzustellenden Formsohlen-Paaren entsprechen. Die Hohlräume werden von Metall-Formflächen umschlossen, welche nicht beheizbar sind. Zweckmäßig wird man eine Presse wählen, mit welcher auf einer Laminat-Platte eine Vielzahl von Formsohlen-Paaren gleichzeitig tiefziehbar ist.

Das Vliesstoff-Laminat wird nach seiner Herstellung zu dem Aufnahmeraum des Tiefziehwerkzeugs entsprechenden Platten ausgeformt. Jede dieser Platten wird danach in einer Vorwärmzone auf eine Temperatur aufgeheizt, bei der gewährleistet ist, daß die Mantelkomponente im erweichten, klebefähigen Zustand das Formwerkzeug erreicht. Die zum Erhitzen notwendigen, konkreten Temperaturen können leicht ermittelt werden, wenn der Schmelzbereich der Mantelkomponente der Kern/Mantel-Fasern und die Wegstrecke zwischen der Vorwärmzone und dem Formwerkzeug bekannt sind.

Das so erwärmte Laminat wird nun in das unbeheizte Formwerkzeug gelegt und dieses geschlossen. Nach 6 bis 8 Sekunden Verweildauer ist der Tiefziehvorgang beendet und das Laminat so weit abgekühlt, daß nach dem Öffnen der Form die Einlegesohlen-Paare dauerhaft im Laminat eingeformt sind.

Es folgt das Ausstanzen dieser einzelnen Einlegesohlen-Paare.

Für den Fall, daß die Einlegesohlen geruchsabsorbierende Bestandteile enthalten sollen, werden diese auf den dünneren Abdeck-Vliesstoff vor dessen Verbinden mit dem Grundmaterial auf der dem Fuß abgewandten Seite aufgetragen, insbesondere, wenn es sich dabei um Partikel handelt. Diese können der zum Laminieren verwendeten Haftmasse beigemischt sein oder mittels dieser Haftmasse auf dem dünnen Vliesstoff befestigt werden. Verwendet man Aktivkohle-Fasern, so ist es möglich, diese schichtartig auf der dem Fuß abgewandten Seite des Abdeckvliesstoffs mittels Haftmasse aufzubringen und dann mit einem weiteren Haftmassenauftrag die Laminierung mit dem Grundmaterial vorzunehmen. Eine Imprägnierung mit bakteriziden Substanzen, wie sie in DE 30 12 114 A1 vorgeschlagen ist, kann an jeder Stelle des erfindungsgemäßen Verfahrens erfolgen, so vor dem Laminieren, nach der Herstellung des Laminats, nach dem Tiefziehen oder an den fertig geformten Einlegesohlen-Paaren. Die Auswahl erfolgt hier allein aufgrund der örtlichen Gegebenheiten unter Berücksichtigung größtmöglicher Wirtschaftlichkeit und der Forderung, den Verfahrensablauf möglichst wenig zu beeinträchtigen.

## Patentansprüche

1. Einlegesohle für Schuhe, enthaltend ein Grundmaterial, welches, ohne Vorhandensein eines zusätzlichen Klebemittels, durch einen vernadelten Vliesstoff gebildet wird, der aus einem Stapelfasergemisch von mehrheitlich Polyesterfasern und von saugfähigen Fasern besteht, wobei ein Teil der Polyesterfasern geschrumpfte Fasern sind,
dadurch gekennzeichnet, daß der das Grundmaterial bildende Vliesstoff eine Zusammensetzung aufweist aus 50 bis 60 Gew.-% Fasern des Kern/Mantel-Typs mit einem Schmelzbereich der Copolyester-MantelKomponente von 110 bis 140 °C und der Polyethylenterephthalat-Kern-Komponente von 255 bis 260°C , 5 bis 15 Gew.-% Polyester-Hochschrumpffasern, 25 bis 40 Gew.-% saugfähigen Fasern, daß der Vliesstoff des Grundmaterials ein Flächengewicht von 800 bis 1200 g/m² bei einer Dicke von 0,70 bis 0,85 cm besitzt, daß fußseitig auf das Grundmaterial ein weiterer, bindemittelfreier, abriebbeständiger, prägegebunder Vliesstoff mittels Haftmasse laminiert ist, welcher mindestens um 1/5 dünner als der Vliesstoff des Grundmaterials ist, und daß das gesamte Laminat aus den beiden Vliesstoffen dreidimensional verformt ist.

2. Einlegesohle nach Anspruch 1, dadurch gekennzeichnet, daß die saugfähigen Fasern aus Zellwolle, Lyocell, Wolle oder Baumwolle bestehen.

3. Einlegesohle nach Anspruch 1 oder 2, dadurch gekennzeichnet, daß der abriebbeständige, dünne Vliesstoff auf der dem Grundmaterial zugewandten Seite geruchsabsorbierende Bestandteile enthält.

4. Verfahren zur Herstellung einer Einlegesohle für Schuhe mit einem Aufbau gemäß Patentanspruch 1, wobei man aus dem Gemisch der das Grundmaterial bildenden Stapelfasern ein Vlies krempelt und anschließend nadelt, wonach der erhaltene Vliesstoff geschrumpft wird und zuletzt die Einlegesohlen ausgestanzt werden,
dadurch gekennzeichnet, daß man das Vernadeln des Vlieses mechanisch und einmalig von einer seiner Flächen her vornimmt, daß man den vernadelten Vliesstoff in einem Strom überhitzten Wasserdampfes berührungslos zu dem Grundmaterial schrumpft, daß man anschließend den die fußseitige Abdeckung bildenden, prägegebundenen Vliesstoff auf eine Temperatur von 20 bis 40°C oberhalb des Erweichungsbereichs einer auf diese Abdeckung aufgebrachten Haftmasse erhitzt, dann auf die Haftmassenseite der Abdeckung das unbeheizte Grundmaterial aus dem vernadelten und geschrumpften Vliesstoff legt und dieses zwischen unbeheizten Walzen aufkaschiert, daß man im nächsten Verfahrensschritt dieses Laminat auf eine Temperatur aufheizt, bei der gewährleistet ist, daß die Mantelkomponente der Grundmaterial-Fasern in erweichtem, klebefähigem Zustand das als Tiefzieh-Presse ausgestaltete Formwerkzeug erreichen, in welchem mehrere, der dreidimensionalen Form der Einlegesohlen-Paare entsprechende, Hohlräume vorgesehen sind, welche von entsprechenden Formflächen umschlossen werden, daß man während einer Zeitspanne von 6 bis 8 s in der geschlossenen, unbeheizten Form das Laminat abkühlen läßt, daß man danach die Form öffnet, das tiefgezogene Laminat entnimmt und anschließend das Ausstanzen der geformten Einlegesohlen-Paare vornimmt.

## Claims

1. An insole for shoes, comprising a base material which, without the presence of an additional adhesive, is formed by a needled nonwoven comprising a staple fibre blend of polyester fibres in the majority and absorbent fibres, a portion of the polyester fibres being shrunk fibres,
characterized in that the nonwoven forming the base material has a composition of from 50 to 60% by weight of fibres of the core-sheath type having a melting range of from 110 to 140°C for the copolyester sheath component and of from 255 to 260°C for the polyethylene terephthalate core component, from 5 to 15% by weight of polyester high-shrinkage fibres and of from 25 to 40% by weight of absorbent fibres; in that the nonwoven of the base material has a basis weight of from 800 to 1200 g/m² coupled with a thickness of from 0.70 to 0.85 cm; in that on the foot-facing side the base material has laminated onto it by means of an adhesive a further nonwoven, this nonwoven being binder-free, abrasion-resistant, embossing-bonded and thinner by at least 1/5 than the nonwoven of the base material; and in that the entire laminate of the two nonwovens is three-dimensionally moulded.

2. An insole according to claim 1, characterized in that the absorbent fibres are viscose rayon, lyocell, wool or cotton.

3. An insole according to claim 1 or 2, characterized in that the abrasion-resistant thin nonwoven comprises odour-absorbing constituents on the side facing the base material.

4. A process for producing an insole for shoes which has a construction as set forth in claim 1 by carding the blend of the staple fibres forming the base material into a web, then needling the web, then shrinking the nonwoven obtained and lastly punching out the insoles,
characterized in that the needling of the web is effected mechanically and singly from one of its surfaces; in that the needled nonwoven is shrunk contactlessly in a stream of superheated steam to form the base material; in that the embossing-bonded nonwoven which forms the foot-facing cover is then heated to a temperature of from 20 to 40°C above the softening range of an adhesive material applied to this cover, the unheated base material comprising the needled and shrunk nonwoven is then placed on the adhesive-material side of the cover and laminated on between unheated rolls; in that in the next step this laminate is heated to a temperature sufficient to ensure that the sheath component of the base material fibres are in a softened, tacky state when arriving at the mould, which is configured as a deep-drawing press and which has a plurality of cavities which correspond to the three-dimensional shape of the pairs of insoles and which are surrounded by corresponding moulding surfaces; in that the laminate is allowed to cool down in the closed unheated mould for a period of from 6 to 8 s; in that thereafter the mould is opened, the deep-drawn laminate is removed and subsequently the moulded pairs of insoles are punched out.

## Revendications

1. Semelle intérieure de chaussure comprenant une matière de base formée par un non-tissé aiguilleté sans présence supplémentaire d'une colle, non-tissé constitué d'un mélange de fibres artificielles, qui sont en majorité en fibres en polyester, et en fibres absorbantes, une partie des fibres en polyester étant des fibres rétractées,
caractérisée en ce que le non-tissé, qui forme la matière de base, présente une composition de 50 à 60% en poids de fibres de type âme-gaine, la zone de fusion de la composante en copolyester de l'enveloppe étant comprise entre 110 et 140°C et celle de la composante en polyéthylène téréphtalate du noyau, entre 255 et 260°C, de 5 à 15% en poids de fibres ayant subi une rétraction élevée et de 25 à 40% en poids de fibres absorbantes, en ce que le non-tissé de la matière de base possède un grammage compris entre 800 et 1200 g/m² avec une épaisseur comprise entre 0,70 et 0,85 cm, en ce que, côté pied, un autre non-tissé, qui est exempt de liant, résistant à l'abrasion et lié au moyen d'un gaufrage, est laminé au moyen d'un agent adhésif sur la matière de base, ce non-tissé étant au moins de 1/5 plus mince que le non-tissé de la matière de base et en ce que l'ensemble laminé, constitué des deux non-tissés, est déformé en trois dimensions.

2. Semelle intérieure de chaussure selon la revendication 1, caractérisée en ce que les fibres absorbantes se composent de laine artificielle, de Lyocel, de laine ou de coton.

3. Semelle intérieure de chaussure selon la revendication 1 ou 2, caractérisée en ce que le non-tissé mince et résistant à l'abrasion, contient des composants absorbant l'odeur sur la face tournée vers la matière de base.

4. Procédé de fabrication d'une semelle intérieure de chaussure présentant une composition selon la revendication 1, selon lequel un non-tissé est cadré et ensuite aiguilleté à partir du mélange des fibres artificielles qui forment la matière de base, puis soumis à une rétraction, et dans lequel on découpe finalement les semelles intérieures à la matrice,
caractérisé en ce que le non-tissé est aiguilleté mécaniquement en une seule fois sur une de ses faces, en ce que le non-tissé aiguilleté subit une rétraction dans un courant de vapeur d'eau surchauffée, sans contact avec la matière de base, en ce qu'ensuite, on réchauffe le non-tissé lié au moyen d'un gaufrage, formant le recouvrement côté pied, à une température de 20 à 40°C supérieure à la plage de température de ramollissement d'un agent adhésif appliqué sur ce recouvrement, qu'ensuite, on pose ensuite sur le côté de l'agent adhésif du recouvrement, la matière de base en non-tissé aiguilleté et rétracté non chauffée et on procède au doublage de celle-ci entre des cylindres non chauffés, en ce que dans l'étape suivante, on réchauffe cet aggloméré laminé à une température à laquelle il est garanti que la composante gaine des fibres de la matière de base atteint, en état ramolli et adhésif, l'outil de formage conçu comme emboutisseuse, dans lequel sont prévus plusieurs creux correspondant à la forme tridimensionnelle des paires de semelles intérieures, qui sont enfermés entre des surfaces de formage correspondantes, en ce que l'on laisse refroidir l'aggloméré laminé dans le moule non chauffé pendant un laps de temps de 6 à 8 secondes, en ce qu'ensuite, on ouvre le moule, on extrait l'aggloméré laminé embouti et on procède ensuite au découpage à la matrice des paires de semelles intérieures formées.
